Europäisches Patentamt

European Patent Office

Office européen des brevets

(19)

(11) Veröffentlichungsnummer : **0 123 827**
**B1**

(12) **EUROPÄISCHE PATENTSCHRIFT**

(45) Veröffentlichungstag der Patentschrift :
28.05.86

(21) Anmeldenummer : **84102208.0**

(22) Anmeldetag : **02.03.84**

(51) Int. Cl.⁴ : **C 08 G  73/06**, **H 01 B   1/12**,
**C 25 B   3/02**

(54) Verfahren zur Herstellung von elektrisch leitfähigen feinteiligen Pyrrolpolymerisaten.

(30) Priorität : 07.03.83 DE 3307954

(43) Veröffentlichungstag der Anmeldung :
07.11.84 Patentblatt 84/45

(45) Bekanntmachung des Hinweises auf die Patenterteilung : 28.05.86 Patentblatt 86/22

(84) Benannte Vertragsstaaten :
BE DE FR GB NL

(56) Entgegenhaltungen :
US-A- 3 574 072
Chemical Abstracts Band 99, Nr. 22, 28. November
1983, Columbus, Ohio, USA R. NOUFI "The incorporation of ruthenium oxide in polypyrrole films and the
subsequent photooxidation of water at n-gallium
phosphide photoelectrode", Seite 190, Spalte 1, Abstract Nr. 179038n
Chemical Abstracts Band 99, Nr. 10, 5. September
1983, Columbus, Ohio, USA R.A. BULL et al. "Polymer
films on electrodes. 13. Incorporation of catalysts into
electronically conductive polymers: iron phthalocyanine in polypyrrole", Seite 40, Spalte 2, Abstract Nr.
71762e

(73) Patentinhaber : BASF Aktiengesellschaft
Carl-Bosch-Strasse 38
D-6700 Ludwigshafen (DE)

(72) Erfinder : Naarmann, Herbert, Dr.
Haardtblick 15
D-6719 Wattenheim (DE)
Erfinder : Heckmann, Walter, Dr.
Geiersbergstrasse 2
D-6940 Weinheim (DE)
Erfinder : Koehler, Gernot, Dr.
Berner Weg 32
D-6700 Ludwigshafen (DE)
Erfinder : Simak, Petr, Dr.
Philipp-Scheidemann-Strasse 17
D-6700 Ludwigshafen (DE)

**0 123 827**

**Beschreibung**

Die Erfindung betrifft ein Verfahren zur Herstellung von elektrisch leitfähigen feinteiligen Pyrrolpolymerisaten durch Polymerisieren von Pyrrol in Gegenwart von Trägerstoffen.

Es ist bekannt, daß man Pyrrol oder andere Verbindungen aus der Klasse der Pyrrole in Gegenwart von Leitsalzen elektrochemisch polymerisieren kann. Dabei scheiden sich die Materialien filmförmig an der Anode ab. Es handelt sich dabei um p.-leitfähige Polypyrrole, die die Anionen der Leitsalze eingelagert enthalten. Unter definierten Elektrolysebedingungen, insbesondere durch Einhaltung der Spannungen und der Stromdichte, können elektrisch leitfähige Pyrrolpolymere auch in feinteiliger Form an der Anode abgeschieden werden.

Für viele Anwendungszwecke, beispielsweise zur Herstellung von Elektronikbauteilen, elektrischen Schaltern, speziellen Elektrodenmaterialien, ist es erforderlich, die elektrisch leitfähigen Pyrrolpolymeren durch einen weiteren Verarbeitungsschritt in die gewünschte Anwendungsform zu überführen. Beispielsweise müssen pulverförmige Pyrrolpolymere durch Verpressen in entsprechende Formkörper verarbeitet werden. Es hat sich gezeigt, daß durch Verarbeitung der bekannten pulverförmigen Pyrrolpolymerisate zu Formkörpern eine Reduzierung der Leitfähigkeit eintritt im Vergleich zu solchen Polymerisaten, die filmförmig anodisch abgeschieden worden sind.

Aufgabe der vorliegenden Erfindung ist es, ein Verfahren zur Herstellung von elektrisch leitfähigen feinteiligen Pyrrolpolymeren zu schaffen, welches leicht durchführbar und breit anwendbar ist, wobei die elektrischen Leitfähigkeiten der erhaltenen feinteiligen Pyrrolpolymerisate den gewünschten Anforderungen genügen.

Die Aufgabe der Erfindung wird gelöst durch ein Verfahren, bei dem Pyrrol in Gegenwart von feinteiligen Trägerstoffen polymerisiert.

Gegenstand der Erfindung ist weiterhin die Verwendung der so hergestellten elektrisch leitfähigen feinteiligen Pyrrolpolymerisate zur Herstellung von Formkörpern und von Beschichtungen.

Die erfindungsgemäß erhaltenen leitfähigen feinteiligen Pyrrolpolymerisate zeichnen sich durch eine hohe Leitfähigkeit aus, die im allgemeinen im Bereich von 1 bis $10^2$ S/cm liegt. Sie besitzen außerdem ein hohes mechanisches Niveau. Die feinteiligen Copolymeren haben gute anwendungstechnische Eigenschaften, z. B. können aus ihnen Elektroden, Katalysatoren, Speichersysteme, Batterien, Schalter, Halbleiterbauteile, Abschirmmaterialien, Solarzellen hergestellt werden. Sie können auch zur antistatischen Ausrüstung von Kunststoffen dienen. Sie dienen auch als Beschichtungsmaterial z. B. zur Herstellung von Abschirmschichten gegen Strahlungen. Die erfindungsgemäßen feinteiligen Pyrrolpolymerisate werden überall dort einen technischen Fortschritt bewirken, wo ein hohes mechanisches Niveau, ein geringes spezifisches Gewicht bei guter Leitfähigkeit gewünscht wird.

Die Verbindung aus der Klasse der Pyrrole, die sich für das erfindungsgemäße Verfahren eignen, sind einmal Pyrrol selbst als auch die substituierten Pyrrole, wie N-Alkylpyrrole, N-Arylpyrrole, die an den C-Atomen monoalkyl- oder thialkylsubstituierten Pyrrole und die an den C-Atomen monohalogen oder dihalogen substituierten Pyrrole. Zum erfindungsgemäßen Verfahren kann Pyrrol allein oder in Mischung mit anderen Verbindungen aus der Klasse der Pyrrole verwendet werden. Vorzugsweise verwendet man unsubstituiertes Pyrrol selbst. Werden substituierte Pyrrole eingesetzt, so sind das 3,4-Dialkylpyrrol, insbesondere mit 1 bis 4 C-Atomen im Alkyl, sowie auch die 3,4-Dihalogenpyrrole, insbesondere das 3,4-Dichlorpyrrol bevorzugt.

Es können auch gegebenenfalls bestimmte Mengen anderer Verbindungen, die mit Pyrrolen copolymerisieren, mitverwendet werden.

Als Verbindungen, die mit Pyrrolen copolymerisieren, eignen sich z. B. Azulen und dessen Derivate, wie Benzazulen, Kujaazulen, ferner Cyclopentadien, Fulven, Inden oder auch Quadratsäure. Es kommen auch heterocyclische Verbindungen in Frage, wie Imidazol, Thiazol, Furan oder Thiophen. Auch 2-Bromthiophen, 2,6-Dimethylpyridin und Pyrazin können verwendet werden. Bezogen auf 10 Teile Pyrrol, können 1 bis 10 Teile der mit Pyrrol copolymerisierenden Verbindungen Verwendung finden.

Die für das Verfahren geeigneten Trägerstoffe sind natürliche oder synthetische Verbindungen, die vorzugsweise saure Gruppen enthalten oder durch Zusatz von Protonsäuren oder sauer reagierenden Zusätzen, wie z. B. Kaliumhydrogensulfat oder ähnlichen Verbindungen protonenaktiv eingestellt wurden. Die Trägerstoffe können direkt von der Herstellung her saure Gruppen enthalten, wie sauer gefällte Metalloxide oder Oxihydrate oder durch Zusatz von Säuren oder sauren Salzen sauer eingestellt werden, wie z. B. Ruß, der durch Zusatz von Benzolsulfonsäure oberflächich sauer aufgeladen und solvatisiert wird. Als Trägerstoffe eignen sich beispielsweise sulfoniertes Polystyrol, sulfoniertes Lignin, Aluminiumoxide, Silikate, Titanoxide oder Oxidhydrate, Kobaltoxide, Chromoxide, Graphit, Bariumferrit, Bariumtitanat, Zinndioxid, Indiumoxide. Ferner eignen sich Salze, wie $KHSO_4$, $KPF_6$, $LiClO_4$, $NaF$, $BF_4$. Weiterhin Säuren, wie Pikrinsäure, Zitronensäure, Oxalsäure, Toluolsulfonsäure u. ä.

Die feinteiligen Trägerstoffe haben eine durchschnittliche Teilchengröße, die im Bereich von 0,001 bis 1 000 μm, vorzugsweise 0,1 bis 100 μm und eine Oberfläche, die im Bereich von 10 bis 1 000 m²/g liegt. Diese Größe wird durch Stickstoffadsorption gemessen. Die Polymerisation der Pyrrole in Gegenwart der feinteiligen Trägerstoffe wird zweckmäßig in Gegenwart von Hilfsflüssigkeiten durchgeführt. Hierzu eignen sich vor allem organische Lösungsmittel, wie Methanol, Ethanol, Polyol, Aceton,

2

Tetrahydrofuran, Acetonitril, Methylenchlorid oder Eisessig. Es kann aber auch in Wasser, gegebenenfalls in Abmischung mit wassermischbaren Flüssigkeiten polymerisiert werden.

Bezogen auf 1 Teil Pyrrol oder Gemisch aus Pyrrolen bzw. Gemisch aus einer Verbindung der Klasse der Pyrrole mit anderen Verbindungen werden die feinteiligen Trägerstoffe in Mengen von 0,1 bis 50 Teilen, vorzugsweise 1 bis 25 Teilen, verwendet.

Die Hilfsflüssigkeiten werden entweder als Lösung oder als Suspensionsmittel verwendet. So lösen sich z. B. die Pyrrole oder die anderen Monomeren in dem Lösungsmittel, wobei die feinteiligen Zusatzstoffe meist nur suspendiert werden können. Der Anteil der Hilfsflüssigkeit beträgt, bezogen auf 100 Teile des feinteiligen Trägerstoffes, 10 bis 1 000 Gewichtsteile.

Bei der Auswahl der Gewichtsteile von Pyrrolen oder Gemischen aus Pyrrol und anderen Verbindungen sowie Hilfsflüssigkeit und Trägerstoff ist darauf zu achten, daß nicht weniger als 0,1 Teile Hilfsflüssigkeit auf 100 Teile des Gemisches aus Pyrrol und Trägerstoffen entfallen. Vorzugsweise verwendet man 5 bis 100 Gewichtsteile Hilfsflüssigkeit, bezogen auf 100 Teile des Gemisches.

Im zu polymerisierenden System aus Pyrrolen, Hilfsflüssigkeit und Trägerstoffen können gegebenenfalls bei elektrochemischen Verfahren der Polymerisation, um die Leitfähigkeit zu erhöhen, Elektrolyte zugesetzt werden. Hierzu eignen sich insbesondere die Alkali- oder Ammoniumsalze von $PF_6^-$, $ClO_4^-$, $BF_4^-$, $AsF_6^-$, weiterhin organische Säuren, wie Benzolsulfonsäure und ähnliche. Diese sogenannten Leitsalze sind bekannt und können gegebenenfalls auch als Trägermaterialien eingesetzt werden, soweit sie die oben gegebenen Bedingungen bezüglich Teilchengröße und Oberfläche erfüllen. Wesentlich ist es jedoch, daß als Trägerstoff verwendete Leitsalze in der Hilfsflüssigkeit suspendiert sind. Zum Zwecke der Polymerisation sind die Leitsalze in dem jeweiligen System gelöst.

Bei der Polymerisation können gegebenenfalls auch weitere Hilfsstoffe, wie Oxidationsmittel, z. B. Persulfat, Kaliumpermanganat oder auch Sauerstoff zugegen sein.

Die Polymerisation kann bei Temperaturen zwischen — 30 und 100 °C, vorzugsweise bei + 20 bis 45 °C und bei Drucken von 1 bis 100 bar, vorzugsweise von 1 bis 5 bar, erfolgen. Meistens werden Reaktionszeiten von 0,1 bis 600 Minuten, vorzugsweise von 1 bis 10 Minuten, benötigt.

Bevorzugt ist die elektrochemische Polymerisation, wobei die Polymerisation der Monomeren durch anodische Oxidation erfolgt. Es werden hierzu beispielsweise Stromdichten von 2 bis 20 mA/cm$^2$ verwendet. Es werden meistens Spannungen im Bereich von 10 bis 30 Volt angelegt. Sind bei der Polymerisation Leitsalze zugegen, so werden, bezogen auf 100 Teile Monomere, 5 bis 200 Teile Leitsalze verwendet.

Es können auch andere Verfahren der Polymerisation Anwendung finden. Z. B. ist es möglich, in Gegenwart von starken Säuren in Anwesenheit von Sauerstoff zu polymerisieren.

Die Erfindung wird durch die nachfolgenden Beispiele näher erläutert. Die in den Beispielen angegebenen Prozente sind Gewichtsprozente, die Teile Gewichtsteile.

## Beispiel 1

Es werden 1 Teil Ruß, 10 Teile Benzolsulfonsäure und 1 000 Teile Acetonitril vermischt. Diese Reaktionsmischung wird in eine Durchflußelektrolysezelle eingebracht, die zwei Platinelektroden der Größe 20 × 20 cm enthält. Der Elektrodenabstand ist 2 cm und die anliegende Spannung beträgt 30 Volt, so daß eine Stromdichte von 5 mA/cm$^2$ entsteht. Die Reaktionslösung wird für die Dauer von 15 Minuten bei einer Temperatur von 25 °C durch die Durchflußelektrolysezelle geleitet. Danach werden der Reaktionslösung 15 Teile Pyrrol, 10 Teile Tributylamin und 600 Teile Acetonitril zugegeben. Nach einer Reaktionszeit von 60 Minuten hat sich auf den Anoden ein schwarzes pastenförmiges Polymerisat abgeschieden. Nach dem Trocknen erhält man 3 Teile eines feinpulvriges Material, dessen mittlere Teilchengröße im Bereich von 10 μm und dessen Oberfläche im Bereich von 100 m$^2$/g liegt. Die Teilchen werden bei einem Druck von 100 bar und einer Temperatur von 25 °C zu Formkörpern verpreßt, an denen eine elektrische Leitfähigkeit von 55 S/cm gemessen wird.

## Beispiele 2 bis 10

Es wird wie in Beispiel 1 beschrieben gearbeitet, jedoch werden die Trägermaterialien sowie die Monomeren variiert, wobei folgende Ergebnisse erhalten werden :

(Siehe Tabelle Seite 4 f.)

| Bei-spiel | Trägerstoff*) Menge | Art | Monomeres Art | Menge | Ausbeute in Teilen | Leitfähig-keit S/cm |
|---|---|---|---|---|---|---|
| 2 | 5 | Ruß | Pyrrol | 25 | 3,5 | 58 |
| 3 | 1 | $TiO_2$ | Pyrrol | 25 | 3 | 50 |
| 4 | 1 | $Ti_2O_3$ | Pyrrol | 25 | 3 | 48 |
| 5 | 1 | Polystyrol sulfoniert | Pyrrol/Thiophen | 12,5  12,5 | 3,5 | 35 |
| 6 | 1 | $Al_2O_3$ | Pyrrol/Furan | 12,5  12,5 | 3 | 42 |
| 7 | 1 | $SnO_2$ | Pyrrol/Inden | 12,5  12,5 | 3,6 | 48 |
| 8 | 1 | Graphit | Pyrrol/Cyclo-pentadien | 12,5  12,5 | 3,0 | 41 |
| 9 | 1,5 | Barium-titanat | Pyrrol | 10 | 3,0 | 46 |
| 10 | 3 | Barium-ferrit | Pyrrol | 10 | 3,6 | 45 |
| 11 | 1 | Perylen-tetracar-bonsäure | Pyrrol | 20 | 2,8 | 35 |

*) der durchschnittliche Teilchendurchmesser der feinteiligen Trägerstoffe liegt im Bereich von 0,1 bis 100 μm und die Oberfläche im Bereich von 10 bis 1 000 m²/g.

Beispiele 11 bis 17

Es wird wie in Beispiel 1 beschrieben gearbeitet, jedoch anstelle von Benzolsulfonsäure und den anderen angegebenen Trägerstoffen folgende Leitsalze bzw. Trägerstoffe verwendet.

| Bei-spiel | Zusatzkomponente Art | Menge | Ausbeute in Teilen | Leitfähigkeit S/cm |
|---|---|---|---|---|
| 11 | Anthrachinon-disulfosäure | 10 | 3,2 | 52 |
| 12 | Naphthalindi-sulfosäure | 10 | 3,0 | 45 |
| 13 | $KHSO_4$ | 10 | 2,8 | 47 |
| 14 | $H_3PO_4$ | 12 | 3,1 | 42 |
| 15 | Ligninsulfo-säure | 10 | 3,0 | 34 |
| 16 | $K_2S_2O_8$ | 5 | 2,5 | 39 |
| 17 | $H_2SO_4$ | 2 | 3,0 | 54 |

**Patentansprüche**

1. Verfahren zur Herstellung von elektrisch leitfähigen feinteiligen Pyrrolpolymerisaten, dadurch gekennzeichnet, daß man Pyrrole in Gegenwart von 0,1 bis 50 Teilen feinteiligen Trägerstoffen bezogen

4

auf 1 Teil Pyrrol, polymerisiert, deren durchschnittliche Teilchengröße im Bereich von 0,001 bis 1 000 μm und deren Oberfläche im Bereich von 10 bis 1 000 m$^2$/g liegt.

2. Verfahren nach Anspruch 1, dadurch gekennzeichnet, daß man saure Gruppen enthaltende Trägerstoffe verwendet.

3. Verfahren nach Anspruch 1, dadurch gekennzeichnet, daß man die Polymerisation zusätzlich in Gegenwart von Leitsalzen durchführt.

4. Verfahren nach Anspruch 1 und 2, dadurch gekennzeichnet, daß man die Pyrrole in Gegenwart der Trägerstoffe durch anodische Oxidation polymerisiert.

## Claims

1. A process for the preparation of an electrically conductive, finely divided pyrrole polymer, wherein a pyrrole is polymerized in the presence of from 0.1 to 50 parts of a finely divided carrier per part of pyrrole, which carrier has a mean particle size of from 0.001 to 1 000 μm and a surface area of from 10 to 1 000 m$^2$/g.

2. A process as claimed in claim 1, wherein a carrier containing acidic groups is used.

3. A process as claimed in claim 1, wherein the polymerization is carried out in the presence of, in addition, a conductive salt.

4. A process as claimed in claims 1 and 2, wherein a pyrrole is polymerized in the presence of a carrier by means of anodic oxidation.

## Revendications

1. Procédé de préparation de polymères pyrroliques conducteurs de l'électricité en fines particules, caractérisé en ce que l'on polymérise des pyrroles en présence de 0,1 à 50 parties pour 1 partie du pyrrole de matières supports en fines particules, dont la granulométrie se situe entre 0,001 et 1 000 μm et leur surface dans la gamme de 10 à 1 000 m$^2$/g.

2. Procédé suivant la revendication 1, caractérisé en ce que l'on emploie des matières supports contenant des groupes acides.

3. Procédé suivant la revendication 1, caractérisé en ce que la polymérisation est en outre effectuée en présence de sels conducteurs.

4. Procédé suivant la revendication 1 ou 2, caractérisé en ce que les pyrroles sont polymérisés en présence des matières supports par une oxydation anodique.